# EUROPEAN PATENT APPLICATION

(11) **EP 1 708 465 A1**
(43) Date of publication of application: **04.10.2006**
(21) Application number: 05251993.1
(22) Date of filing: 30.03.2005
(51) Int. Cl.: H04M 1/2745, H04M 1/57

(54) **Communications interface**

(71) Applicant: BRITISH TELECOMMUNICATIONS public limited company, London EC1A 7AJ (GB)
(72) Inventor: The designation of the inventor has not yet been filed

(57) **Abstract**

A communications interface comprises a plurality of modems 12,13,14 each for communication by way of a respective network. A call routing and address management processor 2 controls connections between domestic communications devices (4,5,7,9,11) and the networks in dependence upon factors including call cost, network availability and call type.

The processor 2 also manages address book and calendar data and may provide an enhanced caller identification display based upon stored address book information. Were a incoming CLI number is not present in the address boo, the processor 2 can access the world wide web ad search for additional detail from directory web sites(16,17,18).

The processor 2 may also access other websites (20, 21,22) to obtain calendar information to populate a family diary to avoid appointment clashes and to facilitate booking sitters, taxis or determining public transport availability for example.

## Description

The present invention relates to a communications interface and more particularly to a communications interface for use in bringing together a multiplicity of communications devices and a plurality of communications networks.

Many homes now have several ways of communicating with the outside world and internally. For example it is not unusual for homes to have connections to the public switched telephone network (PSTN), a broadband (DSL or ADSL) network and some kind of wireless network such as a cellular phone network. As new technologies become available to consumers, managing communications becomes an increasingly difficult task and using one communications network to enhance the user's experience of another requires multiple accesses via different communication devices.

In home communications devices may include a number of cordless or corded phones, cellular phones, personal computers, laptop computers, personal digital assistants (or pocket personal computers), gaming consoles and, increasingly, home entertainment terminals which are capable of selecting information or entertainment to be delivered by way of a connected communications network, by satellite or by broadband network.

Each of these devices, some of which may be associated with a particular individual and some of which will have communal usage, are likely to include directories, addresses and other data which need to be maintained in each of the devices individually and which could be more useful if (selectively) available to other devices in the home or carried by members of the home community.

Furthermore, where multiple networks are available, a choice needs to be made as to which communications network to use to attempt any particular function and, with multiple users, to avoid conflict between them for network capacity. The choice of network may also be influenced by the economics of using one particular network in preference to another, by the volume or bandwidth required for a particular activity and the time at which the activity needs to be performed.

Here we should consider that an inter person telephone or video call for example needs instantaneous communication, the video call requiring higher bandwidth than a voice call.

On the other hand an e-mail or similar electronic communication could be considered as being less instantaneous. Similarly, if an entertainment centre is being used for a "live" event then instantaneous communication at high bandwidth is needed, the bandwidth varying on the kind of event, a lower bandwidth being requires for a sound only programme than for a programme including live video. However, if the entertainment centre is "downloading" an event for later viewing (i.e. is recording a programme, music or film for deferred use), the urgency of the communication is lower.

According to the present invention there is provided a communications interface for use between a plurality of communications networks and a multiplicity of personal communications devices, the interface comprising at least one data store for storing address data, control means for managing stored address data and for obtaining said data from multiple sources, means to transfer data to and from each of the multiplicity of personal communications devices and means to download data from some of said multiple sources characterised in that the control means determines from data associated with an incoming communication additional data concerning the source of said communication and, while connecting the incoming communication to one of the personal communications devices determines whether that device is capable of displaying the additional data and if not causing said additional data to be displayed on another of said personal communications devices.

According to a second aspect of the present invention there is provided a communications interface for use between a plurality of communications networks and a multiplicity of personal communications devices, the interface comprising at least one data store for storing calendar data, control means for managing stored calendar data and for obtaining said data from multiple sources, means to transfer data to and from each of the multiplicity of personal communications devices and means to download data from some of said multiple sources characterised in that the control means is responsive to user entered data to obtain from predetermined data sources, calendar data relevant to the or each user of the communications interface and to combine the calendar information for each user obtained from the multiple sources.

The multiple sources may include calendar data entered into any of the multiplicity of personal communications devices and/or predetermined sources addressable by way of internet or intranet access.

Alternatively, the communications interface may receive calendar data transmitted at periodic intervals from particular data stores such as calendar data stored on a secure intranet site associated with one of the users of the interface to which external access (polling) is not permitted.

A communications interface in accordance with the invention will now be described by way of example only with reference to the accompanying drawings of which:

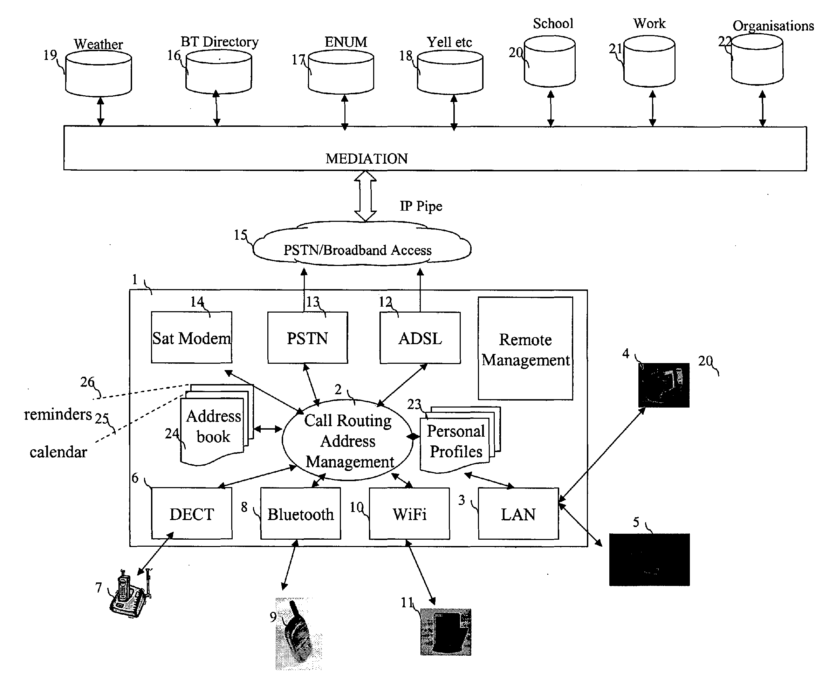

Fig 1 is a block schematic diagram of the communications interface and devices with which it interfaces:

Referring first to figure 1 the interface 1 comprises a call routing address management processor 2, essentially a microprocessor or similar device, which controls a number of electronic interfaces to domestic apparatus and external and internal networks. It also has controls and communicates with a number of data stores.

Internal interfaces may include connection to a local area network 3 for communicating with personal computers 4 and VOIP (Voice over Internet Protocol) telephones 5. A DECT interface may be provided for communicating with cordless telephone apparatus 7 and Bluetooth interface 8 which allows synchronisation with cellular telephones 9 or appropriately adapted PDAs or PPCs. A WiFi network connection 10 may also be provided to enable PDAs 11 or laptop computers or personal computers to communicate.

In practice not all of the interfaces will necessarily be required and other interfaces may be provided to enable apparatus such as television receiver boxes and the like to communicate.

For external communication purposes a connection interface 13 for the public switched telephone network (PSTN) or for asynchronous digital signalling 12 (broadband) or synchronous digital signalling (SDL) are also included. A modem 14 for connection to a satellite dish for example to receive additional digital signalling may also be present.

External to the customers property PSTN and Broadband access 15 via appropriate service providers (ISP) gives access to the world wide web or internet and allows the call routing and address management processor 2 to obtain information from sources such as Directory services websites 16, 17,18 and information resources, for example from a weather forecasting website19.

In order to provide a calendar facility to the home, to avoid date clashes and such like, access to diary information of schools, work environments or clubs and other organisations to which family members subscribe may also be accessed from time to time.

Such data when obtained or delivered may be stored either in personal profile page stores 23 related to individual members of the family and/or in calendar 25 or reminder 26 stores of the interface 1. Also included in the communications interface 1 is an address store 24 in which names addresses telephone numbers and e-mail addresses of contacts may be stored.

Alternatively, some contacts may be stored in personal profile pages where privacy is required between family members.

Having considered the make up of the interface we will now consider some aspects of the operation of the call routing/address management processor which also manages the diary and calendar entries of the system. It is important to note that the processor 2 operates in both learning mode and training mode - the latter enabling the users to input linking and the former acting to determine from historic usage what links are to be established.

These modes are best considered by example of the various functions carried out by the processor 2 in respect of each of the activities with which the home interface is associated and we shall consider first incoming and outgoing telephony. It has been previously noted that connections from the interface 1 are available to both the PSTN (typically for POTS (Plain Old Telephone Service) activity) and to broadband which enables VoiP connections. When a telephone call originates from any of the telephone 7, 9, 5 for example, the processor determines which is the better route to use for the call. For example by examining the call type from the dialled digits it may determine that a local call is being made and that may be better transported via the PSTN while an international call may be better suited to (and less expensive) is transmitted via the broadband connection and VoiP.

It may also recognise the destination as one contained in the address book 25, and if so may return information to the phone or to a screen associated with the phone, for example if the user is near the PC 4, details of the person being called. Alternatively, the user may request that a call be made to a telephone associated with an entry in the address book by use of an input from the PC4 or PDA/Laptop 11.

If the processor 2 does not recognise the number being called, while the call is in progress it may cause access to be made to one or more of the databases 16, 17, 18 to see if it can establish a name, address or business type for example for the call being made. This would enable appropriate entries to be made in the address book or to be added to one of the personal profiles at the users option. This also enables the processor 2 to make suggestions of alternative numbers should the first number prove to be engaged or unobtainable.

An example here may be if the number called is a Taxi company and is engaged, by searching the external directories for other Taxi Companies in the same area, an alternative number can be offered to the user.

In a further example the processor 2 may learn the users preferred options for taxi companies, so that if the user requires a taxi he may simply instruct the processor 2 via a suitable input means (PC 4, PDA11, Address book selection from phone) to contact a taxi company. The processor 2 may then attempt to call taxi companies in the preferred order until it finds one which accepts a call. In a still further alternative, the processor 2 can access taxi company websites and directly book an available taxi by scanning such companies websites to determine availability at the time required provided that sufficient input is available from the user.

It is simple to adapt the above scenario to other services such as home delivery meals, for example from pizza companies and the like. Again the processor 2 may contact pizza companies in a preferred order or may order from a pizza company website by way of the internet. Preferences such as the type of meal preferred by individual members can be offered through the PC 4 screen or on the PDA by showing the preferred option (by historic choice) and offering the opportunity to accept or select a different option.

For incoming telephone calls an enhanced caller identification service can be provided to the users. It is already known to provide CLI from the exchange of the PSTN which identifies the number of the calling party. By referring to the address book or personal profiles, the processor 2 may identify the calling party and display additional information to the user. This function can also be used to direct an incoming call to a particular telephone by associating (from calls made previously to the calling number identified or by the main user accepting calls from the particular number), the most likely recipient for the call. The processor 2 may also display a photograph or picture previously associated with the calling number if desired.

Also by considering historic usage it is possible to determine calls which may be made in sequence, for example recognising that when "A" receives a call from "B" , "A" usually follows this with a call to "C". So for example if on receipt of a call from, say, a mobile number belonging to a son, the matriarch usually calls the boy's father.

Another facility permits the display of the call recipients diary so that if the incoming call relates to a potential appointment the user can immediately check to see what his/her availability is and may at the same time be able to check for any conflict with other family members diaries.

In respect of the calendar 25 (diary), the processor 2 has an additional functionality which enables a check to be kept on other potential conflicting events. For example, the processor 2 can be trained to monitor particular websites for important dates. Examples shown here include access to a schools website 20. Periodically, the processor 2 automatically accesses the website 20 to determine what events affecting the children in the household are occurring. For instance school holidays for each of the younger members of the family may be entered into the calendar 25 so that the parents can arrange family holidays or days out on the basis of them. Other events such as parents evenings at the schools can be entered into the diary and drawn to the attention of the users. If, say, both parents indicate that an event should be accepted, then the processor 2 may check whether a usual child minder or sitter is available, possibly by automatic access via the world wide web to a sitters calendar or by reminding the parents to telephone, setting up the call as appropriate or e-mailing a request to preferred sitters.

Where it is permissible, the processor 2 may also access calendars related to work positions although it is possible that such access will not be permitted for security reasons by many employers. Therefore, the processor 2 may accept incoming messages from an employers calendar program notifying employee events which can also be stored in the communal calendar 25 and in the individuals personal profile 23 calendar so that conflicts can be considered.

The processor 2 may also be trained to visit websites 22 associated with particular organisations, for example to clubs or associations, and to download events which members of the family are likely to attend. Thus if a child in the family belongs to a scouting organisation for example, access to the local troop's website can permit events and meetings to be noted and drawn to the attention of the parents. If the processor 2 is trained to know that attendance at such events requires one of the adult members of the household to take the child then a check can be carried out for conflict between diary entries to see if any one is available to accompany or take/collect the child as required.

In a still further development, comparative website access may be used for example by accessing a weather forecasting website 19 when an entry is made in the calendar 25, the processor 2 can cause weather maps to be displayed for the date and place where the event is proposed. This enables the user to make an informed decision as to whether to attend the event or not.

The system may also check for other items of interest to the family members such as identifying concerts, plays, sports matches, cinema screenings, theatre performances and the like in accordance with personal profile preferences and bringing forward such events for the attention of the users, together with such additional information as may be appropriate such as weather information, downloaded train or bus timetables, other events which may conflict or calendar items.

In a further development, the interface 1 manages access to the networks 15 from the home devices connected thereto. For example when a computer device (PC4, Laptop, PDA11) requires access, to an internet site or other high bandwidth devices such as an on-line television, video recording device (not shown) or video phone or similar, the call routing and address management processor 2 determines the likely bandwidth requirement for the particular access requested and compares it with other demands for incoming and outgoing bandwidth to determine the best route for the communication.

In one example, if the user of the PC4 requires to download a file, the processor 2 may connect the LAN 3 via the ADSL modem 12 to provide the required downloading bandwidth and may, at the same time use the PSTN for a lower speed uploading path to avoid conflict with the download path or simply because another device may be uploading large data files simultaneously. Similarly, if there is a requirement for a video program download from a film storage archive to a domestic data store or video archive for subsequent viewing, the processor 2 may determine whether this is available from the satellite modem 14 or cable modem or by way of the ADSL 12. The bandwidth requirement for downloading may depend on the kind of device which has requested access and the immediacy of use of the information being downloaded. Thus if the download is to be stored for subsequent use a lower bandwidth download can be tolerated and the ADSL bandwidth may be shared more equitably between the PC 4 and the video storage device. However, if the video download is for more immediate viewing, say a live video being viewed contemporaneously, then the ADSL bandwidth may be allocated first to the video download with any spare capacity being used for the alternative use.

It should be noted that, while not shown in the drawing, storage may be provided for video download or other major data files which may exceed the capacity of connected devices.

It will also be appreciated that directory synchronisation between telephone devices may be carried out by way of the interface 1, with the display directories of telephones for example being updated and/or downloaded each time the device is in communication with the interface 1.

Similarly the PDA 11, PC4 or other calendar storing devices may be synchronised each time connection is made to the interface.

It will also be noted that videophone calls can be handled by connection through the ADSL modem and video programs may be recorded from the satellite link.

## Claims

1. A communications interface for use between a plurality of communications networks and a multiplicity of personal communications devices, the interface comprising at least one data store for storing address data, control means for managing stored address data and for obtaining said data from multiple sources, means to transfer data to and from each of the multiplicity of personal communications devices and means to download data from some of said multiple sources **characterised in that** the control means determines from data associated with an incoming communication additional data concerning the source of said communication and, while connecting the incoming communication to one of the personal communications devices determines whether that device is capable of displaying the additional data and if not causing said additional data to be displayed on another of said personal communications devices.

2. A communications interface as claimed in claim 1 in which outgoing communication calls are established through the interface and the control means determines from parameters associated with the call and from current network usage by other attached devices which of the connected networks to pass the call through.

3. A communications interface as claimed in claim 1 or claim 2 in which at least one modem is connected to receive signals from a satellite communications receiver.

4. A communication interface as claimed in claim 3 including storage means for recording information and the control means is adapted to cause selective recording from any connected communications network.

5. A communications interface as claimed in claim 2 in which parameters associated with the call include the cost of establishing the call through a particular network, the type of call and the type of device making the call.

6. A communications interface as claimed in any preceding claim in which the interface includes modems for connection to at least two of the PSTN, ADSL, DSL and satellite communication networks.

7. A communications interface as claimed in any preceding claim in which the interface includes connections to a local area network at least one low power radio transceiver for communicating with portable devices.

8. A communications interface as claimed in claim 7 in which one low power radio transceiver operates I accordance with the Bluetooth protocol.

9. A communications interface as claimed in claim 7 or claim 8 in which one low power radio transceiver operates in accordance with DECT standards.

10. A communications interface for use between a plurality of communications networks and a multiplicity of personal communications devices, the interface comprising at least one data store for storing calendar data, control means for managing stored calendar data and for obtaining said data from multiple sources, means to transfer data to and from each of the multiplicity of personal communications devices and means to download data from some of said multiple sources **characterised in that** the control means is responsive to user entered data to obtain from predetermined data sources, calendar data relevant to the or each user of the communications interface and to combine the calendar information for each user obtained from the multiple sources.

11. A communications interface as claimed in claim 10 in which the multiple sources include calendar data entered into any of the multiplicity of personal communications devices and/or predetermined sources addressable by way of internet or intranet access.

12. A communications interface as claimed in claim 10 or claim 11 in which the interface receives calendar data transmitted at periodic intervals from particular data stores such as calendar data stored on a secure intranet site associated with one of the users of the interface to which external access (polling) is not permitted.
